(19) **Europäisches Patentamt**

**European Patent Office**

**Office européen des brevets**

(11) **EP 1 669 725 A1**

(12) **EUROPEAN PATENT APPLICATION**

(43) Date of publication:
**14.06.2006 Bulletin 2006/24**

(51) Int Cl.:
***G01D 5/38*** *(2006.01)*

(21) Application number: **05027122.0**

(22) Date of filing: **12.12.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **13.12.2004 JP 2004360609**

(71) Applicant: **SONY CORPORATION
Tokyo (JP)**

(72) Inventor: **Tamiya, Hideaki
1-10, Kiyoku-cho
Kuki-shi
Saitama (JP)**

(74) Representative: **Müller - Hoffmann & Partner
Patentanwälte,
Innere Wiener Strasse 17
81667 München (DE)**

(54) **Displacement detection apparatus, displacement gauging apparatus and fixed point detection apparatus**

(57)     A displacement detecting apparatus, a displacement gauging apparatus and a fixed point detection apparatus can highly accurately detect a fixed point or gauge a displacement by reducing the disturbances of polarization due to the stress and the buckling of the optical fiber for transmitting a light beam emitted from a light source to the detecting side. The displacement detection apparatus includes a light source for emitting a light beam, an extinction ratio converting unit that raises the extinction ratio of the light beam emitted from the light source to not less than 20 dB, a focusing lens for focusing the light beam of an extinction ratio raised to not less than 20 dB by the extinction ratio converting unit, an optical fiber of the polarization holding type for transmitting the light beam focused by the focusing lens, a diffraction grating fitted to an object of measurement so as to be irradiated with and diffract the light beam transmitted through the optical fiber, and a light receiving unit that receives the light beam diffracted by the diffraction grating, the light beam focused by the focusing lens with the extinction ratio raised to not less than 20 dB by the extinction ratio converting unit being made to enter the optical fiber with its axis of polarization made to agree with the optical axis of the optical fiber or an axis orthogonally intersecting the optical axis, the light receiving unit being adapted to detect the displacement of the object of measurement by means of the level of the rate of receiving the diffracted light beam.

FIG.7

## Description

CROSS REFERENCES TO RELATED APPLICATIONS

The present invention contains subject matter related to Japanese Patent Application JP 2004-360609 filed in the Japanese Patent Office on December 13, 2004, the entire contents of which being incorporated herein by reference.

BACKGROUND OF THE INVENTION

1. Field of the Invention

This invention relates to a displacement detection apparatus for detecting a displacement by detecting diffracted light diffracted by a diffraction grating, a displacement gauging apparatus for gauging the quantity of displacement by utilizing interference of diffracted light diffracted by a diffraction grating and a fixed point detection apparatus for detecting a fixed point by means of diffracted light.

2. Description of the Related Art

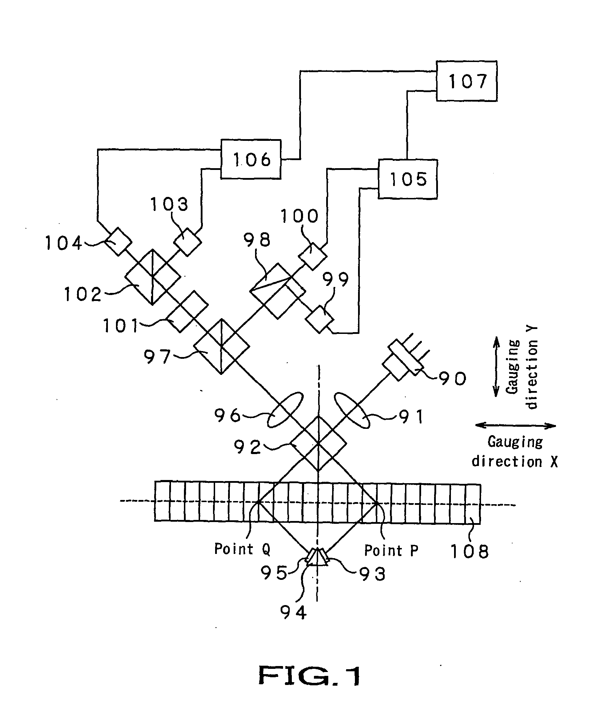

Grating interferometers designed to detect the positional displacement a diffraction grating fitted onto a moving scale by utilizing interference of light are known. Now, a displacement detection apparatus will be described below by referring to FIG. 1 of the accompanying drawings. FIG. 1 schematically illustrates a displacement detection apparatus including a transmission type diffraction grating.

As shown in FIG. 1, the displacement detection apparatus includes a coherent light source section 90, a first lens 91, a first polarization beam splitter (PBS) 92, a first quarter wave plate 93, a reflection prism 94, a second quarter wave plate 95, a second lens 96, a beam splitter (BS) 97, a second PBS 98, a first photoelectric transducer 99, a second photoelectric transducer 100, a third quarter wave plate 101, a third PBS 102, a third photoelectric transducer 103, a fourth photoelectric transducer 104, a first differential amplifier 105, a second differential amplifier 106 and an incremental signal generator 107 and is adapted to read the transmission type diffraction grating arranged on a scale 108.

The coherent light source 90 emits light to the first lens 91. The first lens 91 converges incident light to produce an appropriate light beam and emits it to the first PBS 92. The first PBS 92 divides the light beam that enters it into two light beams having an S-polarized component and a P-polarized component respectively. The S-polarized light beam is a polarized component formed by light striking the interface and light reflected by the interface of light and adapted to oscillate in a direction perpendicular to the plane of incidence. The P-polarized light beam is a polarized component adapted to oscillate in a direction horizontal relative to the plane of incidence.

The light beam having the S-polarized component is reflected by the first PBS 92, whereas the light beam having the P-polarized component is transmitted through the first PBS 92. If the light beam from the coherent light source section 90 is linearly polarized light, its direction of polarization is inclined by 45° before it strikes the first PBS 92. With this arrangement, the intensity of the light beam having the S-polarized component and that of the light beam having the P-polarized component are made equal to each other.

The light beam having the S-polarized component that is reflected by the first PBS 92 is made to strike point P of the diffraction grating recorded on the scale 108, whereas the light beam having the P-polarized component that is transmitted through the first PBS 92 is made to strike point Q of the diffraction grating. They are then diffracted in respective directions expressed by the formula below:

$$\sin \theta_1 + \sin \theta_2 = n \cdot \lambda / \Lambda,$$

where $\theta_1$ represents the angle of incidence relative to the scale 108 and $\theta_2$ represents the angle of diffraction from the scale 108, while $\Lambda$ represents the pitch (width) of the grating and $\lambda$ and n respectively represent the wavelength of light and the degree of diffraction.

If the angle of incidence and that of diffraction at point P are $\theta_1 p$ and $\theta_2 p$ while the angle of incidence and that of diffraction at point Q are $\theta_1 q$ and $\theta_2 q$ respectively, the known displacement detection apparatus of FIG. 1 is so adjusted as to realize $\theta_1 p = \theta_2 p = \theta_1 q = \theta_2 q$. The degree of diffraction is the same at point P and at point Q.

The light beam (S-polarized component) diffracted at point P is made to pass through the first quarter wave plate 93, reflected perpendicularly by the reflection prism 94 and returned to point P so as to be diffracted by the diffraction grating. At this time, since the optical axis of the first quarter wave plate 93 is inclined by 45° relative to the direction of polarization of incident light, the light beam that is returned to point P comes to have a P-polarized component.

On the other hand, the light beam (P-polarized component) diffracted at point Q is made to pass through the second quarter wave plate 95, reflected perpendicularly by the reflection prism 94 and returned to point Q so as to be diffracted by the diffraction grating. At this time, since the optical axis of the second quarter wave plate 95 is inclined by 45° relative to the direction of polarization of incident light, the light beam that is returned to point Q comes to have a S-polarized component.

The light beams that are diffracted again at points P and Q are then returned to the first PBS 92. Since the light beam returned from point P has a P-polarized component, it is transmitted through the first PBS 92. On the other hand, since the light beam returned from point Q has an S-polarized component, it is reflected by the first PBS 92. Thus, the light beams returned to point P and point Q are made to overlap each other at the first PBS 92 and converged to an appropriate beam by the second lens 96, which beam then enters the BS 97.

The BS 97 divides the entering light beam into two beams, one of which is made to enter the second PBS 98 while the other is made to enter the third quarter wave plate 101. Note that the second PBS 98 and the third quarter wave plate 101 are inclined by 45° relative to the direction of polarization of incident light.

The light beam that enters the second PBS 98 is divided into a light beam having an S-polarized component and a light beam having a P-polarized component, of which the light beam having the S-polarized component is made to enter the first photoelectric transducer 99 while the light beam having the P-polarized component is made to enter the second photoelectric transducer 100. An interference signal $A\cos(4Kx + \delta)$ is obtained at the first photoelectric transducer 99 and the second photoelectric transducer 100. In $A\cos(4Kx + \delta)$, K is equal to $2\pi/\Lambda$ and x represents the quantity of movement while $\delta$ represents the initial phase. Note that the signal obtained at the first photoelectric transducer 99 and the signal obtained at the second photoelectric transducer 100 show a phase difference of 180°.

Of the light beams that enter the third quarter wave plate 101 the light beam having a P-polarized component and the light beam having an S-polarized component are circularly polarized in opposite directions and made to overlap each other to produce a linear polarized light beam, which then enters the third PBS 102. The light beam that enters the third PBS 102 is divided into a light beam having an S-polarized component and a light beam having a P-polarized component, of which the light beam having the S-polarized component is made to enter the third photoelectric transducer 103 while the light beam having the P-polarized component is made to enter the fourth photoelectric transducer 104. The direction of polarization of the linearly polarized light beam that enters the third PBS 102 makes a full turn as the diffraction grating is moved by $\Lambda/2$ in the x direction. Thus, like the first photoelectric transducer 99 and the second photoelectric transducer 100, the third photoelectric transducer 103 and the fourth photoelectric transducer 104 produce an interference signal of $A\cos(4Kx + \delta')$. Note that the signal obtained at the third photoelectric transducer 103 and the signal obtained at the fourth photoelectric transducer 104 show a phase difference of 180°.

The third PBS 102 is inclined by 45° relative to the second PBS 98. Therefore, the signals obtained at the third photoelectric transducer 103 and at the fourth photoelectric transducer 104 show a phase difference of 90° relative to the signals obtained at the first photoelectric transducer 99 and at the second photoelectric transducer 100.

The first differential amplifier 105 differentially amplifies the electric signals input from the first photoelectric transducer 99 and the second photoelectric transducer 100 and outputs signals obtained by canceling the DC (direct current) components of the interference signals to the incremental signal generator 107. Similarly, the second differential amplifier 106 differentially amplifies the electric signals input from the third photoelectric transducer 103 and the fourth photoelectric transducer 104 and outputs signals obtained by canceling the DC components of the interference signals to the incremental signal generator 107.

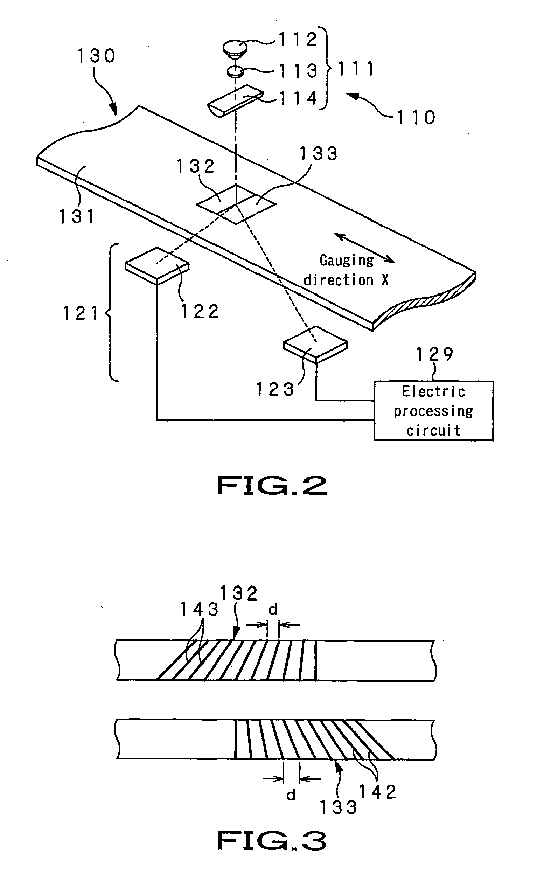

FIG. 2 of the accompanying drawings schematically illustrates a known fixed point detection apparatus disclosed in Patent Document 1 (Jpn. Pat. Appln. Laid-Open Publication No. 4-324316) listed below by the applicant of the present patent application. The fixed point detection apparatus includes a stationary section 110 and a movable section 130 that is movable in the gauging direction (X direction), of which the stationary section 110 includes an optical system 111 and a detection system 121 while the movable section 130 includes a substrate 131 and two volume type holographic diffraction gratings 132, 133 arranged on the upper surface of the substrate 131.

The optical system 111 has a light source 112 that is typically a semiconductor laser for outputting a laser beam, a collimator lens 113 and a focusing lens 114. The detection system 121 has light receiving devices 122, 123 and an electric processing circuit 129.

FIG. 3 of the accompanying drawings schematically illustrates the holographic diffraction gratings 132, 133 of the known fixed point detection apparatus. The holographic diffraction gratings 132, 133 are formed by using transmission/volume type holograms. The holographic diffraction gratings 132, 133 may also be simply referred to as holograms hereinafter. As shown in FIG. 3, the lattice intervals or the lattice pitch d of each of the holograms 132, 133 is made to sequentially change in the gauging direction. The distribution planes 142, 143 that respectively define the lattice intervals or the lattice pitches d of the holograms 132, 133 are inclined relative to the upper surfaces of the holograms 132, 133 and the angles of inclination are sequentially and continuously changed in the gauging direction. Thus, as incident light is diffracted by the holograms 132, 133, the diffraction efficiency continuously changes in the gauging direction.

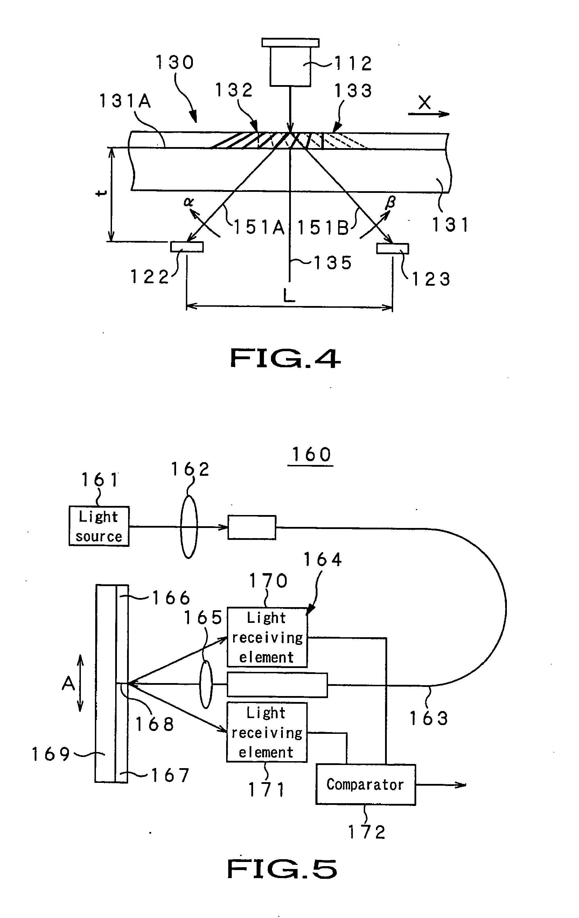

FIG. 4 of the accompanying drawings is a schematic illustration of a principal part of the fixed point detection apparatus of FIG. 2. As shown in FIG. 4, the two holograms 132, 133 are arranged side by side in a transversal direction on the upper surface 131A of the substrate 131. The two holograms 132, 133 are arranged symmetrically relative to a center plane 135. More specifically, the angles of inclination of the distribution planes 142, 143 of the holograms 132, 133 are made to change sequentially and continuously at the opposite sides of the center plane 135 in a symmetrical manner relative to the center plane 135 and the lattice intervals or the lattice pitches d of each of the holograms 132, 133 are also made to change sequentially and continuously in a symmetrical manner relative to the center plane 135. The two holograms 132, 133 are arranged in such a way that the respective points where their diffraction efficiencies become maximal differ from each other in the gauging direction.

As the movable section 130 is moved relative to the stationary section 110 and it is moved relative to the light receiving devices 122, 123 and the light source 112 that are standing still in FIG. 4, light diffracted by the first hologram 132 is detected by the first light receiving device 122 whereas light diffracted by the second hologram 133 is detected by the second light receiving device 123.

Since the two holograms 132, 133 are arranged in such a way that the respective points where their diffraction efficiencies become maximal differ from each other in the gauging direction, the peak of the optical intensity curve of diffracted light detected by the first light receiving device 122 and the peak of optical intensity curve of diffracted light detected by the second light receiving device 123 differ from each other. Therefore, there exists an intersection where the two optical intensity curves cross each other and hence a point where two curves show the same value. This point is the fixed point to be obtained by the fixed point detection apparatus.

SUMMARY OF THE INVENTION

Meanwhile, fixed point detection apparatus and displacement gauging apparatus that are formed by using light emitting diodes and lasers are made to show a high resolution in these days so that they can gauge a distance less than 1nm. On the other hand, the sensors are not allowed to emit heat for such gauging operations. Therefore, an arrangement of separating the light source from the sensor and transmitting a light beam by way of an optical fiber is being popularly used.

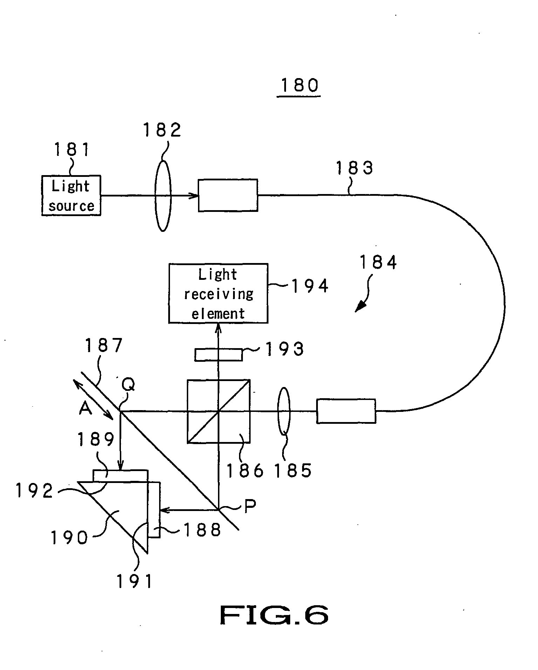

FIG. 5 of the accompanying drawings schematically illustrates a fixed point detection apparatus 160 adapted to transmit a light beam emitted from a light source 161 to a detecting section 164 by way of an optical fiber 163 of the polarization holding type and detect a fixed point. The light beam emitted from the light source 161 is transmitted to a focusing lens 162 by way of the optical fiber 163 of the polarization holding type and irradiated onto two diffraction gratings 166 and 167 arranged side by side on the object of measurement 169 and the light beams diffracted by the adjacently located edges 168 of the two diffraction gratings 166 and 167 are received respectively by two light receiving elements 170 and 171. Then, the rates at which the two light receiving elements 170 and 171 receive light are compared by a comparator 172 and the point where the compared signals show predetermined respective levels is defined as fixed point.

Thus, an optical fiber 163 of the polarization holding type is used in the fixed point detection apparatus 160 of FIG. 5 in order to transmit the light beam emitted from the light source 161 in a state where the polarized component is held. However, because of the influence of the stress and the buckling on the optical fiber, the polarization is disturbed so that the detecting section 164 can be affected by the disturbance to make it impossible for the fixed point detection apparatus 160 to operate stably for measurements.

This problem will be discussed more specifically below. If the axis of polarization of the light beam emitted from the optical fiber 163 is shifted slightly due to the stress and the buckling of the optical fiber 163, the polarized components of the light beams that enter the diffraction gratings 166 and 167 can be changed accordingly. Generally, the diffraction efficiency of a diffraction grating varies depending not only on the polarized component of the incident light beam but also on the properties of the diffraction grating itself so that the rates at which light beams enter the light receiving elements 170 and 171 can vary and the apparatus may erroneously recognize that the fixed point is shifted.

Therefore, for the fixed point detection apparatus 160 to perform stably for the operation of detecting the fixed point, it is necessary to stabilize the axis of polarization of the beam coming out from the optical fiber 163.

FIG. 6 of the accompanying drawings schematically illustrates a displacement gauging apparatus 180 adapted to transmit the light beam emitted from a light source 181 by way of an optical fiber 183 of the polarization holding type to a detecting section 184 and gauge the displacement an object of measurement by means of the detecting section 184. After transmitting the light beam emitted from the light source 181 by way of the optical fiber 183 of the polarization holding type to a focusing lens 185, the gauging apparatus makes the light beam enter a polarization beam splitter 186. The polarization beam splitter 186 divides the incident light beam into two beams and makes them strike a diffraction grating scale 187. The diffracted light beams that are obtained are transmitted through $\lambda/4$ wave plates 188 and 189 and reflected by mirror planes 191 and 192 respectively so as to return to the polarization beam splitter 186, following the same light paths. Then, the two light beams are recombined at the polarization beam splitter 186 and directed toward a polarization device 193 as an interference signal. After passing through the polarization device 193, the interference signal is converted into an electric signal by the light receiving element 194 to gauge the displacement of the diffraction grating.

However, if the polarization is disturbed under the influence of the stress and the buckling of the optical fiber 183 in the above-described displacement gauging apparatus 180, again the ratio of the quantities of light of the two beams produced by polarization beam splitter 186 changes accordingly. The change in the ratio of the quantities of light appears as a change in the modulation ratio when the two light beams are recombined at the polarization beam splitter 186 to become an interference signal to consequently give rise to fluctuations in the output signal. Since they adversely affect the accuracy of gauging displacements, it is necessary to stabilize the axis of polarization of the beam that is output from the optical transmission unit as much as possible.

In view of the above identified circumstances, it is therefore desirable to provide a displacement detecting apparatus, a displacement gauging apparatus and a fixed point detection apparatus that can highly accurately detect a fixed point or gauge a displacement by reducing the disturbances of polarization due to the stress and the buckling of the optical fiber for transmitting a light beam emitted from a light source to the detecting side.

According to the present invention, there is provided a displacement detection apparatus including: a light source for emitting a light beam, an extinction ratio converting means for raising the extinction ratio of the light beam emitted from the light source to not less than 20 dB, a focusing lens for focusing the light beam of an extinction ratio raised to not less than 20 dB by the extinction ratio changing means, an optical fiber of the polarization holding type for transmitting the light beam focused by the focusing lens, a diffraction grating fitted to an object of measurement so as to be irradiated with and diffract the light beam transmitted through the optical fiber and a light receiving means for receiving the light beam diffracted by the diffraction grating, the light beam focused by the focusing lens with the extinction ratio raised to not less than 20 dB by the extinction ratio converting means being made to enter the optical fiber with its axis of polarization made to agree with the optical axis of the optical fiber or an axis orthogonally intersecting the optical axis, the light receiving means being adapted to detect the displacement of the object of measurement by means of the level of the rate of receiving the diffracted light beam.

Thus, with a displacement detection apparatus as defined above, it is possible to minimize the disturbances of polarization due to the stress and buckling of the optical fiber because the light beam with the extinction ratio raised to not less than 20 dB by the extinction ratio converting means that is focused by the focusing lens is made to enter the optical fiber with its axis of polarization made to agree with the optical axis of the optical fiber or an axis orthogonally intersecting the optical axis.

According to the present invention, there is also provided a displacement gauging apparatus including: a light source for emitting a light beam, an extinction ratio converting means for turning the light beam emitted from the light source into a linearly polarized light beam and raising the extinction ratio thereof to not less than 20 dB, a focusing lens for focusing the light beam of an extinction ratio raised to not less than 20 dB by the extinction ratio changing means, an optical fiber of the polarization holding type for transmitting the light beam focused by the focusing lens, a polarization beam splitter for dividing the light beam transmitted through the optical fiber into two light beams, a diffraction grating fitted to an object of measurement and adapted to receive the two light beams produced by the polarization beam splitter and produce diffracted light beams, a phase plate for changing the polarizations of the two diffracted light beams produced by the diffraction grating, two reflection mirrors for reflecting the two diffracted light beams with the polarizations changed by the phase plate and leading them to the diffraction grating by way of the phase plate once again, a polarizing element for causing the two diffracted light beams led to the diffraction grating by the two reflection mirrors, diffracted and made to enter the polarization beam splitter by the diffraction grating and reflected by or transmitted through the polarization beam splitter to interfere with each other and a light receiving element for receiving the interference light beam obtained by the polarizing element, the light beam focused by the focusing lens with the extinction ratio raised to not less than 20 dB by the extinction ratio converting means being made to enter the optical fiber with its axis of polarization made to agree with the optical axis of the optical fiber or an axis orthogonally intersecting the optical axis, the light receiving means being adapted to detect the displacement of the object of measurement by means of the level of the rate of receiving the diffracted light beam.

Thus, with a displacement gauging apparatus as defined above, it is possible to minimize the disturbances of polarization due to the stress and buckling of the optical fiber because the light beam with the extinction ratio raised to not less than 20 dB by the extinction ratio converting means that is focused by the focusing lens is made to enter the optical fiber with its axis of polarization made to agree with the optical axis of the optical fiber or an axis orthogonally intersecting the optical axis.

According to the present invention, there is also provided a fixed point detection apparatus including: a light source for emitting a light beam, an extinction ratio converting means for turning the light beam emitted from the light source into a linearly polarized light beam and raising the extinction ratio thereof to not less than 20 dB, a focusing lens for focusing the light beam of an extinction ratio raised to not less than 20 dB by the extinction ratio changing means, an optical fiber of the polarization holding type for transmitting the light beam focused by the focusing lens, two diffraction gratings arranged side by side so as to be irradiated with the light beam transmitted through the optical fiber and diffract it, two light receiving means for receiving the diffracted light beams produced by the two diffraction gratings and a comparison means for comparing the rates of receiving light of the two light receiving means, the light beam focused by the focusing lens with the extinction ratio raised to not less than 20 dB by the extinction ratio converting means being made to enter the optical fiber with its axis of polarization made to agree with the optical axis of the optical fiber or an axis orthogonally intersecting the optical axis, the comparison means being adapted to detect a fixed point according to the outcome of the comparison of the rates of receiving light of the two light receiving means.

Thus, with a fixed point detection as defined above, it is possible to minimize the disturbances of polarization due to the stress and buckling of the optical fiber because the light beam with the extinction ratio raised to not less than 20 dB by the extinction ratio converting means that is focused by the focusing lens is made to enter the optical fiber with its axis of polarization made to agree with the optical axis of the optical fiber or an axis orthogonally intersecting the optical axis.

A displacement detection apparatus according to the invention can minimize the disturbances of polarization due to the stress and buckling of the optical fiber to make it possible to highly accurately detect a displacement because the light beam with the extinction ratio raised to not less than 20 dB by the extinction ratio converting means that is focused by the focusing lens is made to enter the optical fiber with its axis of polarization made to agree with the optical axis of the optical fiber or an axis orthogonally intersecting the optical axis.

A displacement gauging apparatus according to the invention can minimize the disturbances of polarization due to the stress and buckling of the optical fiber to make it possible to highly accurately gauge a displacement because the light beam with the extinction ratio raised to not less than 20 dB by the extinction ratio converting means that is focused by the focusing means is made to enter the optical fiber with its axis of polarization made to agree with the optical axis of the optical fiber or an axis orthogonally intersecting the optical axis.

A fixed point detection apparatus according to the invention can minimize the disturbances of polarization due to the stress and buckling of the optical fiber to make it possible to highly accurately detect a fixed point because the light beam with the extinction ratio raised to not less than 20 dB by the extinction ratio converting means that is focused by the focusing lens is made to enter the optical fiber with its axis of polarization made to agree with the optical axis of the optical fiber or an axis orthogonally intersecting the optical axis.

BRIEF DESCRIPTION OF THE DRAWINGS

FIG. 1 is a schematic illustration of a known displacement detection apparatus, showing the configuration thereof;
FIG. 2 is a schematic illustration of a known fixed point detection apparatus described in Patent Document 1, showing the configuration thereof;
FIG. 3 is a schematic illustration of the holographic diffraction arrangement to be used in the fixed point detection apparatus of FIG. 2, showing the configuration thereof;
FIG. 4 is a schematic illustration of a principal part of the fixed point detection apparatus of FIG. 2;
FIG. 5 is a schematic illustration of a fixed point detection apparatus adapted to detect a fixed point by means of an optical fiber, showing the configuration thereof;
FIG. 6 is a schematic illustration of a displacement gauging apparatus adapted to gauge a displacement by means of an optical fiber, showing the configuration thereof;
FIG. 7 is a schematic illustration of an embodiment of displacement gauging apparatus according to the invention, showing the configuration thereof;
FIG. 8 is a schematic illustration of extinction ratio;
FIG. 9 is a schematic cross sectional view of an optical fiber of the polarization holding type;
FIG. 10 is a schematic illustration of an application of an embodiment of displacement gauging apparatus;
FIG. 11 is a schematic illustration of an embodiment of fixed point detection apparatus, showing the configuration thereof;
FIG. 12 is a graph illustrating that the diffraction efficiency of an S-polarized component and that of a P-polarized component differ to a large extent;
FIG. 13 is a schematic block diagram of a system for gauging the extent to which the detected position of a fixed point changes with time when buckling stress is applied to an optical fiber of the polarization holding type;
FIG. 14 is a graph illustrating the displacement of the detected fixed point due to buckling of an optical fiber;
FIG. 15 is a schematic illustration of an optical transmission unit realized by integrally combining a polarizing plate and a focusing lens;
FIG. 16 is a schematic illustration of an optical transmission unit realized by integrally combining a polarizing plate, a collimator lens and a focusing lens and sandwiching the polarizing plate between the collimator lens and the focusing lens;
FIG. 17 is a schematic illustration of an optical transmission unit realized by forming the light receiving end facet of an optical fiber of the polarization holding type so as to show a Brewster's angle in place of using a polarization plate;
FIG. 18 is a schematic illustration of an optical transmission unit realized by forming a polarizing plate at the light emitting window of a semiconductor laser to be used as light source; and
FIG. 19 is a schematic illustration of an optical transmission unit realized by forming the light emitting window glass of a semiconductor laser to be used as light source so as to show a Brewster's angle.

DETAILED DESCRIPTION OF THE PREFERRED EMBODIMENTS

Now, a displacement gauging apparatus and a fixed point detection apparatus will be described by referring to the accompanying drawings that illustrate preferred embodiments thereof.

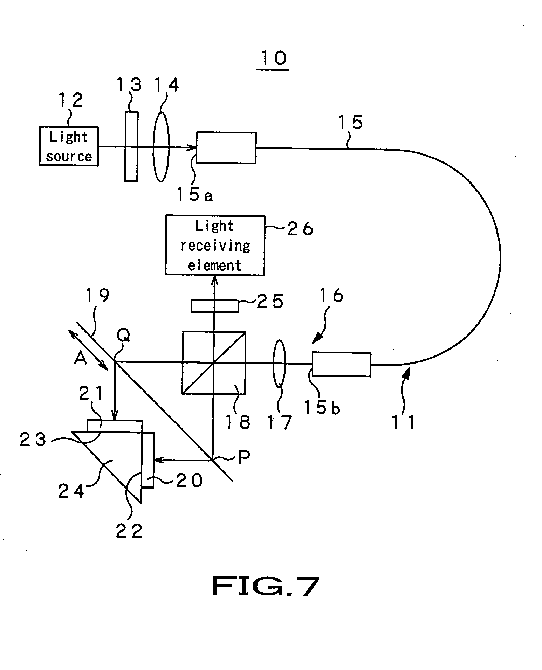

FIG. 7 is a schematic illustration of an embodiment of displacement gauging apparatus according to the invention, showing the configuration thereof. Referring to FIG. 7, the displacement gauging apparatus 10 is adapted to be used in the field of manufacturing semiconductors or liquid crystal for the purpose of gauging quantities of movement of the order of nanometers (nm) and lower orders. The displacement gauging apparatus 10 may not be able to stably gauge quantities of movement when the heat generated by the light source section thereof affects the sensor of the detecting section thereof. In other words, it is necessary to prevent any heat from being transmitted to the detecting section 16. Thus, the light source 12 is separated from the detecting section 16 and the light beam emitted from the light source 12 is transmitted to the detecting section 16 by way of an optical fiber 15.

For this reason, the displacement gauging apparatus 10 includes a light source 12 for emitting a light beam, a polarizing plate 13 that is a sort of polarizing element adapted to be used as extinction ratio converting means for converting the light beam emitted from the light source 12 into a linearly polarized light beam showing an extinction ratio that is as high as not less than 20 dB, a focusing lens 14 for focusing the linearly polarized light beam showing a high extinction ratio and coming from the polarizing plate 13 and an optical fiber 15 of the polarization holding type for transmitting the linearly polarized light beam that is focused by the focusing lens 14.

The displacement gauging apparatus 10 additionally includes a focusing lens 17 for focusing the linearly polarized light beam transmitted through the optical fiber 15, a polarization beam splitter 18 for dividing the linearly polarized light beam that is focused by the focusing lens 17 into two light beams, a diffraction grating 19 adapted to receive the light beams produced by dividing the original light beam by the polarization beam splitter 18 and fitted to an object of measurement, two phase plates 20 and 21 adapted to change the directions of polarization of the two diffracted light beams produced by the diffraction grating 19 and arranged so as to form an angle of 90° between them, a reflection prism 24 having two mirror planes 22 and 23 arranged so as to cause the diffracted light beams from the diffraction grating 19 to reciprocate between the two phase plates, on which reflection prism 24, the two phase plates 20 and 21 are arranged so as to form an angle of 90° between them, a polarizing element 25 for causing the beams recombined by the polarization beam splitter 18 and made to enter it to interfere with each other and a light receiving element 26 for converting the rate at which the interference signal of the two interfering light beams it receives into an electric signal.

The light source 12, the polarizing element 13, the focusing lens 14 and the optical fiber 15 of the polarization holding type may be collectively referred to as optical transmission unit 11. The detecting section 16 includes the focusing lens 17, the polarization beam splitter 18, the diffraction grating 19, the two phase plates 20 and 21, the two mirrors 22 and 23, the polarizing element 25 and the light receiving element 26.

Now, the components of the displacement gauging apparatus 10 will be described below in greater detail. Firstly, the light source 12 may be one for emitting a coherent light beam or a light emitting diode that emits a lowly coherent light beam. Alternatively, it may be one having polarizing properties or having no polarizing properties.

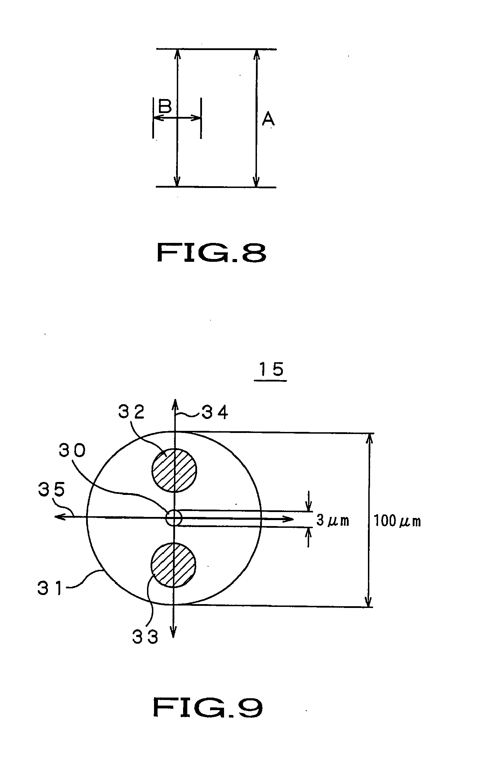

The polarizing plate 13 that is a sort of polarizing element to be used as extinction ratio converting means is adapted to convert the light beam from the light source into a linearly polarized light beam showing an extinction ratio as high as not less than 20 dB. An extinction ratio of not less than 20 dB means that the ratio of a linearly polarized light beam (A) that takes the part of a major axis to the light beam (B) that takes the part of a minor axis in FIG. 8, or A : B, is not less than 100 : 1. The higher the extinction ratio, the better is the quality of a linearly polarized light beam. The polarizing element can realize an extinction ratio of not less than 30 dB or a ratio of A : B equal to 1,000 : 1. The polarizing element may be formed by drawing glass that contains lead in a predetermined direction to orient the internal molecular structure to a predetermined direction and make it operate as polarizing filter. A polarization beam splitter adapted to convert the light beam from the light source into a linearly polarized light beam that shows an extinction ratio as high as not less than 20 dB may be used for the extinction ratio converting means.

The optical fiber 15 of the polarization holding type typically has a round core 30 showing a cross section of a circle with a diameter of 3 $\mu$m and a clad 31 with a diameter of 100 $\mu$m that coaxially surrounds the core 30 as shown in FIG. 9. Both the core 30 and the clad 31 are made of quartz glass but show respective refractive indexes that are different from each other. The refractive index of the core 30 is higher than that of the clad 31. For example, as a light beam of a wavelength $\lambda$ between 600 and 700 nm is led into the core 30, the light beam proceeds while it is reflected by the interface of the core 30 and the clad 31 whose refractive index is lower than that of the core 30. Two glass filaments 32 and 33 that are different from the core 30 and the clad 31 and show a circular cross section are arranged at opposite sides of the core 30 so as to remotely sandwich the core 30. The two glass filaments 32, 33 have a same thermal expansion coefficient and operate to contract the entire clad 31. More specifically, they operate to cool the entire clad 31 and keeps the stress being applied to the core 30 to a constant level. The axis connecting the centers of the two glass filaments 32 and 33 and the center of the core 30 and hence that of the clad 31 is defined as optical axis 34. The light beam emitted from the light source 12 is made to enter the optical fiber 15 while the axis of polarization of the light beam emitted from the light source 12 is made to agree with the optical axis 34 of the optical fiber 15 by means of the polarizing plate 13 and the focusing lens 14. An optical fiber of the polarization holding type may alternatively be an optical fiber of an elliptic core type whose core shows an elliptic cross section.

The polarization beam splitter 18 divides the light beam transmitted through the optical fiber 15 of the polarization holding type and focused by the focusing lens 17 into two light beams having an S-polarized component and a P-polarized component respectively. The axis of polarization of the incident light beam that enters the polarization beam splitter 18 is arranged in such a way that both the light beam having the S-polarized component and the light beam having the P-polarized component show the same power level. The S-polarized light beam is a polarized component that oscillates perpendicularly relative to the plane of incidence defined by the light beam striking the interface of light and the light beam reflected by the interface. The P-polarized light beam is a polarized component that oscillates in parallel with the plane of incidence. The light beam having the S-polarized component is reflected by the polarization beam splitter 18, whereas the light beam having the P-polarized component is transmitted through the polarization beam splitter 18.

The diffraction grating 19 may be a volume type hologram. The diffraction grating 19 is fitted to an object of measurement. The diffraction grating 19 is movable in the direction of arrow A shown in FIG. 7. The lattice pitch of the diffraction grating 19 is typically 0.55 $\mu$m. The position (point Q) where the P-polarized component strikes the diffraction grating 19 after being transmitted through the polarization beam splitter 18 differs from the position (point P) where the S-polarized component strikes the diffraction grating 19 after being reflected by the polarization beam splitter 19.

The optical axis of the first quarter wave plate 20 fitted to the first mirror plane 22 of the reflection prism 24 is inclined by 45° relative to the direction of polarization of the entering light beam. Similarly, the optical axis of the second quarter wave plate 21 fitted to the second mirror plane 22 of the reflection prism 24 is inclined by 45° relative to the direction of polarization of the entering light beam.

The polarization element 25 arranged at the side of the light receiving element 26 is inclined by 45° relative to the direction of polarization of the entering light beams. Therefore, the two light beams from the polarization beam splitter 18 becomes an interference wave as they pass through the polarization element 25. The light receiving element 26 converts the rate at which the interference wave strikes it into an electric signal.

Now, the operation of the displacement gauging apparatus 10 having the above-described configuration will be discussed below. As the light beam emitted from the light source 12 that is coherent or lowly coherent enters the polarization plate 13, it is turned into a linearly polarized light beam showing an extinction ratio that is typically as high as 30 dB. The linearly polarized light beam showing a high extinction ratio is focused by the focusing lens 14 and made to enter the optical fiber 15 of the polarization holding type with the axis of polarization of the linearly polarized light beam made to agree with the optical axis 34 of the optical fiber 15. As the axis of polarization of the light beam that is linearly polarized by the polarization plate 13 is made to agree with the optical axis 34 of the optical fiber 15 of the polarization holding type when the light beam is made to enter the optical fiber 15, it is possible to reduce the fluctuations of the extinction ratio due to the stress and the buckling of the optical fiber 15. Alternatively, the light beam may be made to enter the optical fiber 15 with the axis of polarization of the light beam made to agree with an axis 35 that orthogonally intersects the optical axis 34.

A technique of adjusting and maximizing the extinction ratio of the light beam being emitted from a light emitting end 15b of the optical fiber 15 can be used to make the axis of polarization of the light beam agree with the optical axis of the optical fiber 15 of the polarization holding type.

Thus, the optical transmission unit 11 including the light source 12, the polarizing plate 13, the focusing lens 14 and the optical fiber 15 of the polarization holding type can not only raise the extinction ratio of the light beam emitted from the light emitting end 15b of the optical fiber 15 but also reduce the fluctuations of the extinction ratio due to the stress and the buckling of the optical fiber 15.

The light beam emitted from the optical fiber 15 of the optical transmission unit 11 is focused by the focusing lens 17 of the detecting section 16 before it enters the polarization beam splitter 18. As described above, the polarization beam splitter 18 divides the incident light beam into two light beams having an S-polarized component and a P-polarized component respectively. The light beam having the S-polarized component is reflected by the polarization beam splitter 18 and enters the diffraction grating 19 at point P. The light beam having the P-polarized component is transmitted through the polarization beam splitter 18 and enters the diffraction grating 19 at point Q.

The light beams that enter the diffraction grating 19 at point P and point Q are diffracted in respective directions expressed by the formula below:

$$\sin \theta_1 + \sin \theta_2 = n \cdot \lambda / \Lambda,$$

where $\theta_1$ represents the angle of incidence relative to the grating scale and $\theta_2$ represents the angle of diffraction from the grating scale, while A represents the pitch (width) of the grating and λ, and n respectively represent the wavelength of light and the degree of diffraction.

The light beam diffracted at point P of the diffraction grating (S-polarized component) is transmitted through the first quarter wave plate 20 fitted to the first mirror plane 22 of the reflection prism 24, reflected perpendicularly by the first mirror plane 22 and returned to point P, where it is diffracted by the diffraction grating 19. At this time, since the optical axis of the first quarter wave plate 20 is inclined by 45° relative to the direction of polarization of the incident light beam, the light beam that is returned to point P becomes a light beam having a P-polarized component. In other words, the S-polarized component diffracted at point P of the diffraction grating 19 is transmitted through the first quarter wave plate 20, subsequently reflected by the first mirror plane 22 of the reflection prism 24 and then transmitted again through the first quarter wave plate 20 so that the axis of polarization of the returned light beam perpendicularly intersects the axis of polarization of the forwardly transmitted light beam.

Similarly, the light beam diffracted at point Q of the diffraction grating (P-polarized component) is transmitted through the second quarter wave plate 21 fitted to the second mirror plane 23 of the reflection prism 24, reflected perpendicularly by the reflection prism 24 and returned to point Q, where it is diffracted by the diffraction grating 19. At this time, since the optical axis of the second quarter wave plate 21 is inclined by 45° relative to the direction of polarization of the incident light beam, the light beam that is returned to point Q becomes a light beam having an S-polarized component. In other words, the P-polarized component diffracted at point S of the diffraction grating 19 is transmitted through the second quarter wave plate 21, subsequently reflected by second mirror plane 23 of the reflection prism 24 and then transmitted again through the second quarter wave plate 21 so that the axis of polarization of the returned light beam perpendicularly intersects the axis of polarization of the forwardly transmitted light beam.

Thus, the light beams diffracted again at points P and Q are returned to the polarization beam splitter 18. Since the light beam returned from point P has a P-polarized component, it is transmitted through the polarization beam splitter 18. On the other hand, since the light beam returned from point Q has an S-polarized component, it is reflected by the polarization beam splitter 18. Therefore, the light beams returned from points P and Q are made to overlap each other by the polarization beam splitter 18 before they enter the polarization element 25.

The polarization element 25 causes the two light beams that are made to overlap each other by the polarization beam splitter 18 to interfere with each other. The light receiving element 26 converts the rate at which it receives the interfering light beams into an electric signal to obtain an interference signal. The displacement gauging apparatus 10 gauges the quantity of movement of the diffraction grating 19 that moves in the direction of arrow A, although the quantity of movement may be of the order nanometers or a lower order.

The above-described interference signal can be expressed by Acos (4Kx + δ), where K is equal to 2π/Λ and x represents the quantity of movement while δ represents the initial phase. If the pitch Λ of the diffraction grating 19 is made equal to 0.55 μm, a cycle of the interference wave corresponds to a quantity of movement of the diffraction grating 19 that is equal to 0.1375 μm. Thus, the displacement gauging apparatus can gauge such a distance. As the displacement gauging apparatus converts it into an electric signal and interpolates by 200 typically by means of A/D conversion, it is possible to achieve a very fine resolution of about 0.6895 nm. It is needless to say that the signal has to be output stably when gauging a very fine displacement of 10 nm or less. As the fluctuations of the extinction ratio of the light beam emitted from the above-described optical transmission unit 11 are minimized in the displacement gauging apparatus, it is possible to highly stably gauge quantities of movement with a high resolution.

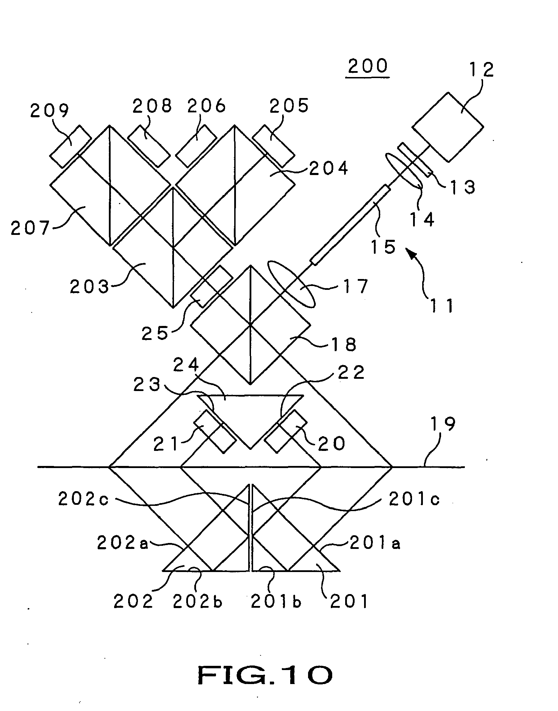

A similar effect can be achieved by increasing the number of times of diffraction and applying it to a detection optical system so as to use an interference signal of Acos (8Kx + δ). FIG. 10 illustrates a displacement gauging apparatus 200 (variation) where an increased number of times of diffraction is applied. The apparatus of FIG. 10 differs from the apparatus of FIG. 7 in that the two light beams produced from the polarization beam splitter 18 and diffracted by the diffraction grating 19 enter respective reflection prisms 201 and 202 by way of planes of incidence 201a and 202a so as to be reflected by reflection planes 201b, 202b and again by reflection planes 201 c, 202c. Then, they enter the diffraction grating 19 once again and become diffracted by the diffraction grating 19 before they respectively get to the two phase plates 20 and 21 and the reflection prism 24. The light beams reflected by the reflection prism 24 are respectively transmitted through the two phase plates 20 and 21 and also the diffraction grating 19 so as to be diffracted there. Then, they are reflected respectively by the reflection prisms 201 and 202 and diffracted by the diffraction grating 19 once again before they get to the polarization beam splitter 18.

The polarization beam splitter 18 causes the entering polarized components to overlap each other and sends them to the polarization element 25. The polarization element 25 causes the two beams that are made to overlap each other by the polarization beam splitter 18 to interfere with each other and sends the interference signal to beam splitter 203. The beam splitter 203 divides the incident light beam into two beams and transmits one of the light beams to a polarization beam splitter 204 and the other to another polarization beam splitter 207.

The light beam that enters the polarization beam splitter 204 is divided into a light beam having an S-polarized component and a light beam having a P-polarized component. The light beam having the S-polarized component is made to enter photoelectric transducer 205, while the light beam having the P-polarized component is made to enter photoelectric transducer 206. The light beam that enters the polarization beam splitter 207 is divided into a light beam having an S-polarized component and a light beam having a P-polarized component. The light beam having the S-polarized component is made to enter photoelectric transducer 208, while the light beam having the P-polarized component is made to enter photoelectric transducer 209.

Thus, the photoelectric transducers 205, 206, 208 and 209 can obtain an interference signal of Acos (8Kx + $\delta$).

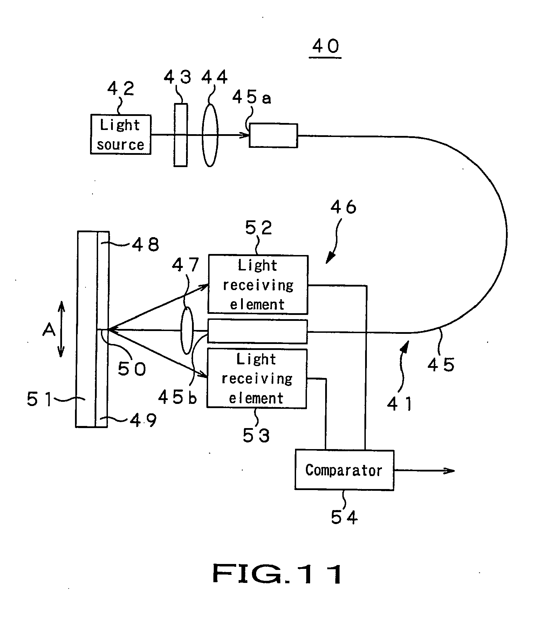

FIG. 11 is a schematic illustration of an embodiment of fixed point detection apparatus 40 according to the invention, showing the configuration thereof. Referring to FIG. 11, the fixed point detection apparatus 40 is adapted to be used in the field of manufacturing semiconductors or liquid crystal for the purpose of gauging quantities of movement of the order of nanometers (nm) and lower orders. The fixed point detection apparatus 40 may not be able to stably operate when the heat generated by the light source section thereof affects the sensor of the detecting section thereof. In other words, it is necessary to prevent any heat from being transmitted to the detecting section 46. Thus, the light source 42 is separated from the detecting section 46 and the light beam emitted from the light source 42 is transmitted to the detecting section 46 by way of an optical fiber 45.

The fixed point detection apparatus 40 is adapted to be used with a displacement gauging apparatus 10 so as to detect, for example, an absolute position on the diffraction grating 19 of the displacement gauging apparatus 10. As pointed out above, the displacement gauging apparatus 10 includes a diffraction grating 19 having a very small pitch A of 0.55 $\mu$m. If a power failure or some other accident occurs to force the gauging operation to be suspended while a displacement is being gauged on the diffraction grating 19, it may be no longer possible to regain the previous gauging position on the diffraction grating when the power supply is restored. A fixed point detection apparatus 40 is developed for the purpose of constantly detecting an absolute position on the diffraction grating. It includes two diffraction gratings 48 and 49 that are formed by using two holograms with different pitches and is adapted to detect a fixed point by detecting the adjacently located edges 50 of the two diffraction gratings 48 and 49.

As shown in FIG. 11, the fixed point detection apparatus 40 includes a light source 42 for emitting a light beam, a polarizing plate 43 that is a sort of polarizing element adapted to be used as extinction ratio converting means for converting the light beam emitted from the light source 42 into a linearly polarized light beam showing an extinction ratio that is as high as not less than 20 dB, a focusing lens 44 for focusing the linearly polarized light beam showing a high extinction ratio and coming from the polarizing plate 43 and an optical fiber 45 of the polarization holding type for transmitting the linearly polarized light beam that is focused by the focusing lens 44.

The fixed point detection apparatus 40 additionally includes a focusing lens 47 for focusing the linearly polarized light beam transmitted through the optical fiber 45, two adjacently arranged diffraction gratings 48 and 49 for causing the linearly polarized light beam that is converged by the focusing lens 47 to be focused at or near the interface section (edges) 50, two light receiving elements 52 and 53 for respectively receiving the diffracted light beams produced as a result of diffraction by the two diffraction gratings 48 and 49 and a comparator 54 for comparing the rates at which the two light receiving elements 52 and 53 receive light. A fixed point is determined by the signal produced as a result of the comparison.

Now, the components of the fixed point detection apparatus will be described below in greater detail. Firstly, the light source 42 may be one for emitting a coherent light beam or a light emitting diode that emit a non-coherent light beam. Alternatively, it may be one having polarizing properties or having no polarizing properties.

The polarizing plate 43 that is a sort of polarizing element to be used as extinction ratio converting means is adapted to convert the light beam from the light source into a linearly polarized light beam showing an extinction ratio as high as not less than 20 dB. The polarizing element can realize an extinction ratio of not less than 30 dB. A polarization beam splitter adapted to convert the light beam from the light source into a linearly polarized light beam that shows an extinction ratio as high as not less than 20 dB may be used for the extinction ratio converting means.

The optical fiber 45 of the polarization holding type is same as the one described above by referring to FIG. 9 and hence will not be described here any further. What is important about the optical fiber 45 of the polarization holding type is that the axis of polarization of the light beam emitted from the light source 42 is made to agree with the optical axis 34 or the axis 35 of the optical fiber 45 of the polarization holding type by way of the polarizing plate 43 and the focusing lens 44.

This is because the fluctuations of the extinction ratio due to the stress and the buckling of the optical fiber can be minimized by making the axis of polarization of the light beam agree with the optical axis 34 of the optical fiber 45 when the light beam that is linearly polarized by the polarizing plate 43 enters the optical fiber 45 of the polarization holding type.

The two diffraction gratings 48 and 49 are arranged side by side so that the linearly polarized light beam that is converged by the focusing lens 47 may be focused at or near the interface section (edges) 50. The two diffraction gratings 48 and 49 may have respective lattice vectors that are different from each other or respective lattice pitches that are different from each other. They may be selected from reflection type holograms and blazed diffraction gratings. FIG. 10 shows two reflection type diffraction gratings 48 and 49, where diffracted light of the +1 degree is emitted to the side of incident light. Transmission type diffraction gratings may alternatively be used.

The two light receiving elements 52, 53 convert the intensities of the diffracted light beams obtained from the above-described two diffraction gratings 48 and 49 into electric signals. The two light receiving elements 52 and 53 are arranged at the side of the light emitting end 45b of the optical fiber 45 relative to the two diffraction gratings 48 and 49.

The comparator 54 compares the electric signals from the two light receiving elements 52 and 53. The outcome of the comparison by the comparator 54 is supplied to a control section (not shown). The control section defines a fixed point where the two signals show arbitrarily selected levels according to the outcome of the comparison by the comparator 54. A point where the two signals show the same output level may be defined as fixed point.

Now, the operation of the fixed point detection apparatus 40 having the above-described configuration will be discussed below. As the light beam emitted from the light source 42 that is coherent or non-coherent enters the polarization plate 43, it is turned into a linearly polarized light beam showing an extinction ratio that is typically as high as 30 dB. The linearly polarized light beam showing such a high extinction ratio is focused by the focusing lens 44 and made to enter the optical fiber 45 of the polarization holding type with the axis of polarization of the linearly polarized light beam made to agree with the optical axis 34 of the optical fiber 45. As the axis of polarization of the light beam that is linearly polarized by the polarization plate 43 is made to agree with the optical axis 34 of the optical fiber 45 of the polarization holding type when the light beam is made to enter the optical fiber 45, it is possible to reduce the fluctuations of the extinction ratio due to the stress and the buckling of the optical fiber 45. Alternatively, the light beam may be made to enter the optical fiber 45 with the axis of polarization of the light beam made to agree with an axis 35 that orthogonally intersects the optical axis 34.

A technique of adjusting and maximizing the extinction ratio of the light beam being emitted from the light emitting end section 45b of the optical fiber 45 can be used to make the axis of polarization of the light beam agree with the optical axis of the optical fiber 45 of the polarization holding type.

Thus, the optical transmission unit 41 including the light source 42, the polarizing plate 43, the focusing lens 44 and the optical fiber 45 of the polarization holding type can not only raise the extinction ratio of the light beam emitted from the light emitting end 45b of the optical fiber 45 but also reduce the fluctuations of the extinction ratio due to the stress and the buckling of the optical fiber 45.

The light beam emitted from the optical fiber 45 of the polarization holding type of the optical transmission unit 41 is converged by the focusing lens 47 of the detecting section 46 and focused at or near the interface (edges) 50 of the two diffraction gratings 48 and 49 that are movable in the direction of arrow A in FIG. 11.

The intensities of the diffracted light beams produced from the two diffraction gratings 48 and 49 are converted into electric signals respectively by the light receiving elements 52 and 53. A point where the two signals show arbitrarily selected levels according to the outcome of the comparison by the comparator 54 is defined as fixed point. A point where the two signals show the same output level may be defined as fixed point. Note, however, that the comparison output of the comparator 54 becomes equal to 0 when the two signals agree with each other. Since the outcome of comparison is also equal to 0 when diffracted light is lost and the outputs of the light receiving elements are equal to 0, it is preferable to differentiate the two signals output from the light receiving elements in order to avoid recognition errors. Thus, preferably, the two signals show certain nonzero values so that they may be discriminated from a 0 situation.

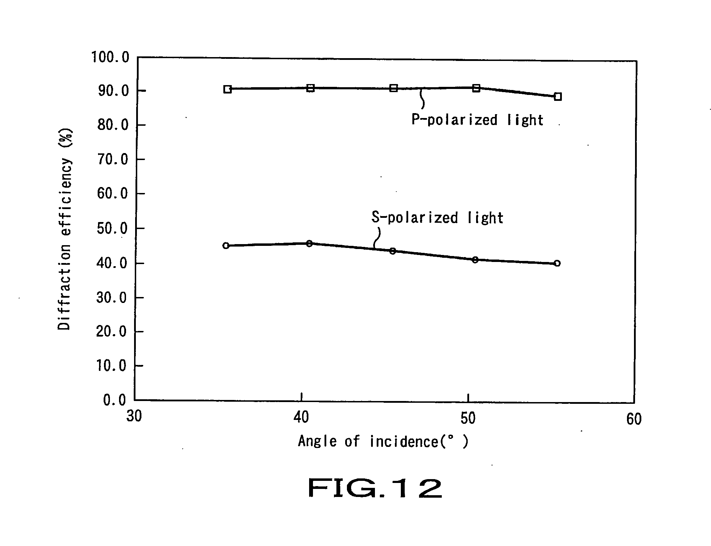

The fixed point detection apparatus 40 of this embodiment is fitted to an object of measurement 51 to detect the absolute positions of the diffraction gratings 48 and 49. Generally, a diffraction grating shows a rate at which it diffracts light that varies as a function of the incoming polarized component. In other words, the diffraction efficiency varies between an S-polarized component and a P-polarized component. If the wavelength of the light beam emitted from the light source is 780nm and the lattice pitch is 0.55 $\mu$m, the diffraction efficiency varies remarkably between an S-polarized component and a P-polarized component as shown in FIG. 12 when the diffraction efficiency of a reflection type hologram is observed. Referring to FIG. 12, the S-polarized component shows a diffraction efficiency between 46% and 41 % while the P-polarized component shows a diffraction efficiency between 91% and 92% for an angle of incidence between 35° and 55° to evidence that the diffraction efficiency of the P-polarized component is by far higher than that of the former component. Additionally, these values can vary among individual apparatus due to the manufacturing process so that manufactured individual apparatus show dispersions to a certain extent in terms of performance.

Thus, it is now possible to stably detect the fixed point without being affected by the fluctuations of the extinction ratio of the light beam entering the diffraction gratings as the fluctuations are reduced.

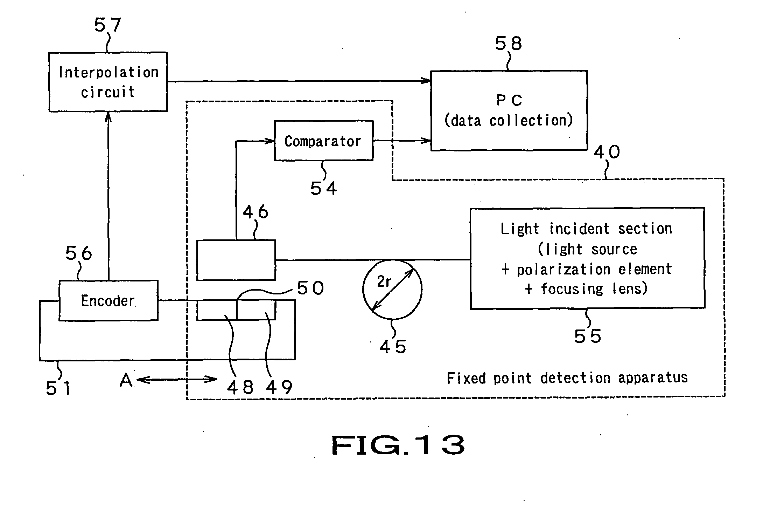

FIG. 13 is a schematic block diagram of a system for gauging the extent to which the detected position of a fixed point changes with time when buckling stress is applied to the optical fiber 45 of the polarization holding type of the fixed point detection apparatus 40 of this embodiment. As shown in FIG. 13, a light incident section 55 is formed as a unit including the light source 42, the polarizing plate 43 and the focusing lens 44 of the fixed point detection apparatus 40 for introducing a linearly polarized light beam with a predetermined extinction ratio into the optical fiber 45. The light incident section 55 introduces a linearly polarized light beam with an extinction ratio of 12 dB or 29 dB into the optical fiber 45 of the polarization holding type. The system observes the change with time of the radius of bend of the optical fiber 45 and that of the detected position of the fixed point that is detected according to the two diffracted light beams coming from the interface section 50 of the two diffraction gratings 48 and 49 fitted to a scale 51.

For this purpose, the gauging system includes an encoder 56 fitted to the scale 51 to detect the analog quantity of displacement as digital data, an interpolation circuit 57 for interpolating the digital values from the encoder 56 by a predetermined number and a personal computer (PC) 58 for collecting positional displacement data on the fixed point detection apparatus 40 based on the numerical values from the interpolation circuit 57. The personal computer 58 is also supplied with the outcome of comparison from the comparator 54 of the fixed point detection apparatus 40.

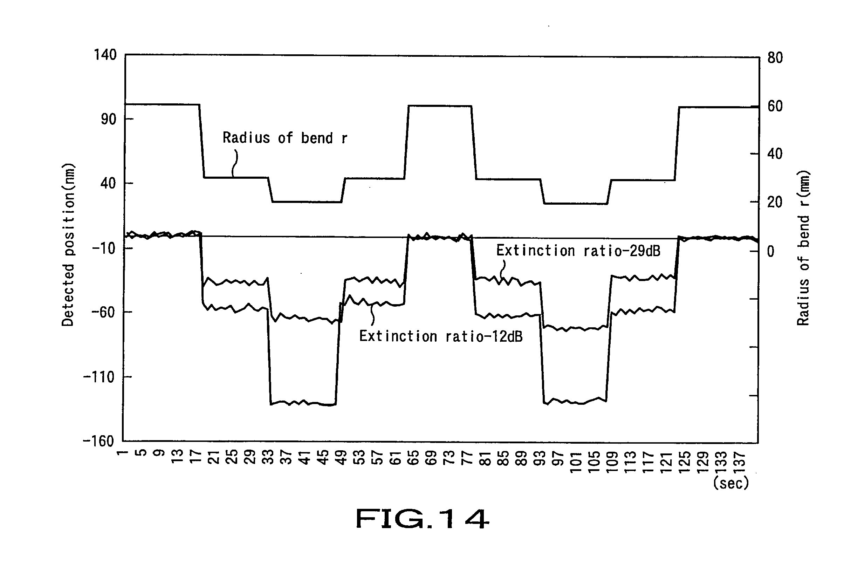

FIG. 14 is a graph illustrating the displacement of the detected fixed point due to buckling of an optical fiber. In FIG. 14, the horizontal axis of the graph indicates the time (minute) and the left vertical axis indicates the detected position (nm) and the right vertical axis indicates the radius of bend (mm) of the optical fiber.

Firstly, the fixed point position that is detected by the fixed point detection apparatus 40 when the radius of bend of the optical fiber is equal to 60 (mm) is defmed as 0 position. Once the light incident section 55 introduces a linearly polarized light beam with an extinction ratio of 12 dB or a linearly polarized light beam with an extinction ratio of 29 dB into the optical fiber 45, the fixed point position is not displaced until 18 minutes thereafter (to be referred to as first state). The radius of bend of the optical fiber 45 becomes equal to 28 (mm) between 18 minutes and 32 minutes after the introduction of the light beam (to be referred to as second state). If the light incident section 55 introduces a linearly polarized light beam with an extinction ratio of 12 dB into the optical fiber 45 in the second state, the fixed point detected by the fixed point detection apparatus 40 is displaced by -60 (nm). If, on the other hand, the light incident section 55 introduces a linearly polarized light beam with an extinction ratio of 29 dB into the optical fiber 45 in the second state, the fixed point detected by the fixed point detection apparatus 40 is displaced only by -35 (nm).

The radius of bend of the optical fiber 45 becomes equal to 18 (mm) between 32 minutes and 48 minutes after the introduction of the light beam (to be referred to as third state). If the light incident section 55 introduces a linearly polarized light beam with an extinction ratio of 12 dB into the optical fiber 45 in the third state, the fixed point detected by the fixed point detection apparatus 40 is displaced by -130 (nm). If, on the other hand, the light incident section 55 introduces a linearly polarized light beam with an extinction ratio of 29 dB into the optical fiber 45 in the third state, the fixed point detected by the fixed point detection apparatus 40 is displaced only by -62 (nm).

The radius of bend of the optical fiber 45 becomes equal to 28 (mm) between 48 minutes and 63 minutes after the introduction of the light beam (to be referred to as fourth state). If the light incident section 55 introduces a linearly polarized light beam with an extinction ratio of 12 dB into the optical fiber 45 in the fourth state, the fixed point detected by the fixed point detection apparatus 40 is displaced by -58 (nm). If, on the other hand, the light incident section 55 introduces a linearly polarized light beam with an extinction ratio of 29 dB into the optical fiber 45 in the fourth state, the fixed point detected by the fixed point detection apparatus 40 is displaced only by -35 (nm).

The radius of bend of the optical fiber 45 becomes equal to 60 (mm) between 63 minutes and 78 minutes after the introduction of the light beam (to be referred to as fifth state). If the light incident section 55 introduces a linearly polarized light beam with an extinction ratio of 12 dB into the optical fiber 45 in the fifth state, the fixed point detected by the fixed point detection apparatus 40 is displaced by 0 (nm) as in the first state. If the light incident section 55 introduces a linearly polarized light beam with an extinction ratio of 29 dB into the optical fiber 45 in the fifth state, the fixed point detected by the fixed point detection apparatus 40 is displaced similarly by 0 (nm).

The radius of bend of the optical fiber 45 becomes equal to 28 (mm) between 78 minutes and 93 minutes after the introduction of the light beam (to be referred to as sixth state). If the light incident section 55 introduces a linearly polarized light beam with an extinction ratio of 12 dB into the optical fiber 45 in the sixth state, the fixed point detected by the fixed point detection apparatus 40 is displaced by -60 (nm). If, on the other hand, the light incident section 55 introduces a linearly polarized light beam with an extinction ratio of 29 dB into the optical fiber 45 in the sixth state, the fixed point detected by the fixed point detection apparatus 40 is displaced only by -35 (nm).

The radius of bend of the optical fiber 45 becomes equal to 18 (mm) between 93 minutes and 108 minutes after the introduction of the light beam (to be referred to as seventh state). If the light incident section 55 introduces a linearly polarized light beam with an extinction ratio of 12 dB into the optical fiber 45 in the seventh state, the fixed point detected by the fixed point detection apparatus 40 is displaced by -130 (nm) similar to the third state. If, on the other hand, the light incident section 55 introduces a linearly polarized light beam with an extinction ratio of 29 dB into the optical fiber 45 in the seventh state, the fixed point detected by the fixed point detection apparatus 40 is displaced only by -62 (nm) similar to the third state.

The radius of bend of the optical fiber 45 becomes equal to 28 (mm) between 108 minutes and 123 minutes after the introduction of the light beam (to be referred to as eighth state). If the light incident section 55 introduces a linearly polarized light beam with an extinction ratio of 12 dB into the optical fiber 45 in the eighth state, the fixed point detected by the fixed point detection apparatus 40 is displaced by -60 (nm) similar to the sixth state. If, on the other hand, the light incident section 55 introduces a linearly polarized light beam with an extinction ratio of 29 dB into the optical fiber 45 in the eighth state, the fixed point detected by the fixed point detection apparatus 40 is displaced only by -35 (nm) similar to the sixth state.

The radius of bend of the optical fiber 45 becomes equal to 60 (mm) between 123 minutes and 137 minutes after the introduction of the light beam (to be referred to as ninth state). If the light incident section 55 introduces a linearly polarized light beam with an extinction ratio of 12 dB into the optical fiber 45 in the ninth state, the fixed point detected by the fixed point detection apparatus 40 is displaced by 0 (nm) as in the first state. If the light incident section 55 introduces a linearly polarized light beam with an extinction ratio of 29 dB into the optical fiber 45 in the ninth state, the fixed point detected by the fixed point detection apparatus 40 is displaced similarly by 0 (nm).

If buckling stress is applied to the optical fiber 45, the displacement of the fixed point is less when a linearly polarized light beam with an extinction ratio of 29 dB that is by far higher than the extinction ratio of 12 dB is introduced into the optical fiber 45 by way of the light incident section 55. Thus, the advantage of using this embodiment is clear.

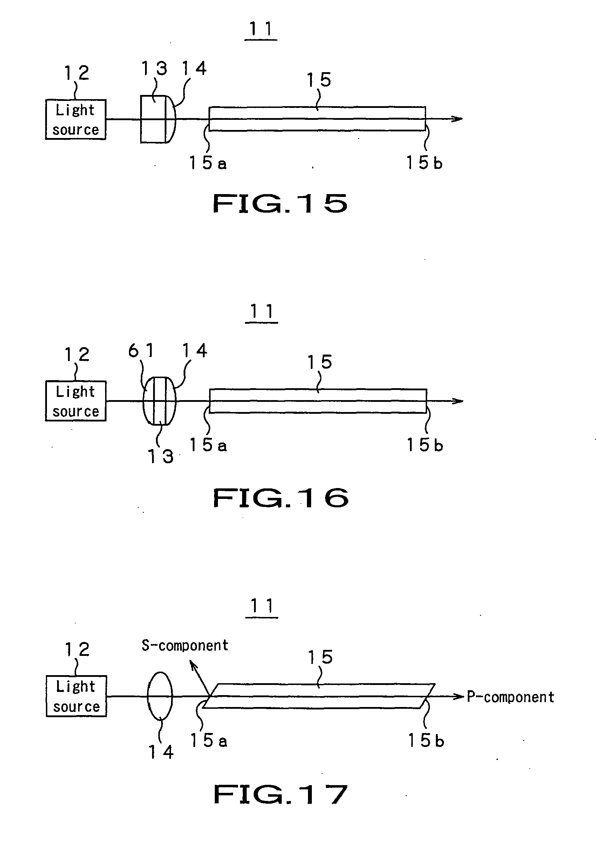

The optical transmission unit 11 and the optical transmission unit 41 of the above-described displacement gauging apparatus 10 and the fixed point detection apparatus 40 illustrated in FIGS. 7 and 11 respectively may be modified in various different ways as will be described below. FIG. 15 schematically illustrates an optical transmission unit realized by integrally combining a polarizing plate and a focusing lens. Note that the components including the light source 12, the polarizing plate 13, the focusing lens 14, the optical fiber 15 of the polarization holding type and the optical transmission unit 11 of the modified embodiments illustrated in FIGS. 15 through 19 are denoted respectively by the reference symbols same as those of the above-described displacement gauging apparatus 10. It may be needless to say that they may alternatively be denoted by the reference symbols same as those of the above-described fixed point detection apparatus 40.

When packaging the light incident section (which is same as the light incident section 55 illustrated in FIG. 13 to the displacement gauging apparatus 10 and includes a light source 12, a polarizing plate 13 and a focusing lens 14) of the optical transmission unit 11, it is necessary to minimize the number of components. The number of components can be reduced by integrally combining the polarizing plate 13 and the focusing lens 14. Of course, it is also possible to produce a linearly polarized light beam showing a high extinction ratio out of the light beam emitted from the light source 12 by means of the polarizing plate 13 of the optical transmission unit 11 of FIG. 15, converge the light beam by means of the focusing lens 14 and make the light beam enter a light receiving end facet 15a of the optical fiber 15, making the axis of polarization of the light beam agree with the optical axis 34 of the optical fiber 15. Thus, the light beam emitted from the light emitting end 15b of the optical fiber 15 is made to show a high extinction ratio and hence little fluctuations of the extinction ratio due to the stress and the buckling of the optical fiber.

FIG. 16 is a schematic illustration of an optical transmission unit 11 realized by integrally combining a polarizing plate 13, a collimator lens 61 and a focusing lens 14 and sandwiching the polarizing plate 13 between the collimator lens 61 and the focusing lens 14. In this modified embodiment, the light beam from the light source 12 is collimated by the collimator lens 61 and made to enter the polarizing plate 13 perpendicularly. Therefore, it is possible to fully exploit the polarizing plate 13 for its performance. In this modified embodiment again, the number of components is reduced as a result of packaging. Of course, the light beam emitted from the light emitting end 15b of the optical fiber 15 is made to show a high extinction ratio and hence little fluctuations of the extinction ratio due to the stress and the buckling of the optical fiber 15. Alternatively, it is also possible to arrange the collimator lens 61, the polarizing plate 13 and the focusing lens 14 separately without integrally combining them.

FIG. 17 is a schematic illustration of an optical transmission unit 11 realized by forming the light receiving end facet 15a of an optical fiber 15 of the polarization holding type so as to show a Brewster's angle in place of using a polarization plate. As the light receiving end facet 15a of the optical fiber 15 is made to show a Brewster's angle, it operates like a polarizing filter at the interface so as to reflect the S-polarized component and allow the P-polarized component to enter the core 30 in the optical fiber 15. In short, it is possible to allow only the P-polarized component to enter the optical fiber 15. Thus, only the P-polarized component of the light beam emitted from the light source 12 is allowed to enter the optical fiber 15 whose light receiving end facet 15a is made to show a Brewster's angle. The S-polarized component is reflected in the direction indicated by an allow in FIG. 17 by the light receiving end facet 15a that is made to show a Brewster's angle and not allowed to enter the core 30 of the optical fiber 15 so that a light beam showing a high extinction ratio is introduced into the optical fiber 15. Thus, with this modified embodiment again, the light beam emitted form the light source 12 is turned to a linearly polarized light beam showing a high extinction ratio, which light beam is then converged by the focusing lens 14 and introduced into the optical fiber 15 with the axis of polarization of the light beam made agree with the optical axis 34 of the optical fiber 15. Thus, the light beam emitted from the light emitting end 15b of the optical fiber 15 is made to show a high extinction ratio and hence little fluctuations of the extinction ratio due to the stress and the buckling of the optical fiber 15. Additionally, since this modified embodiment does not include a polarization element, it provides a space saving effect at the time of packaging.

The light receiving end facet 15a of the optical fiber 15 of the polarization holding type of the modified embodiment of FIG. 17 may by formed by way of a multilayer film process so that all the interfaces of the multilayer film show a Brewster's angle. With this arrangement, the interfaces operate like so many polarizing filters as to reflect the S-polarized component and allow the P-polarized component to enter the core 30 in the optical fiber 15. In short, it is possible to allow only the P-polarized component to enter the optical fiber 15. The light receiving end facet 15a of the optical fiber 15 may be formed so as to operate as polarization beam splitter.

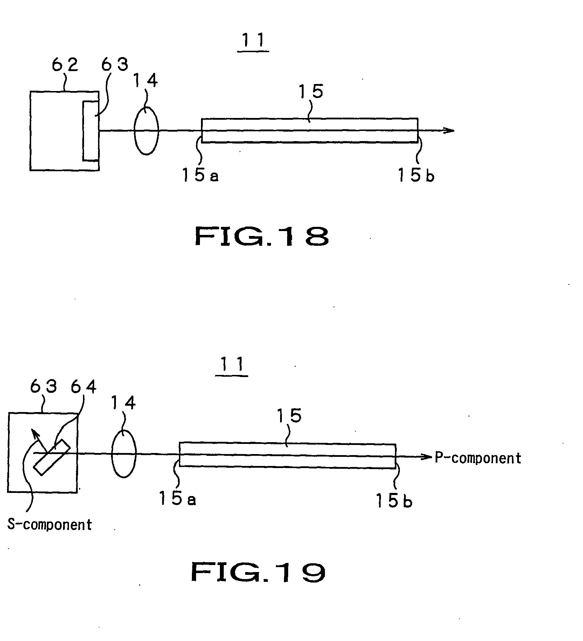

FIG. 18 is a schematic illustration of an optical transmission unit 11 realized by forming a polarizing plate 63 at the light emitting window of a semiconductor laser 62 to be used as light source. The light beam emitted from the semiconductor laser 62 shows an extinction ratio of about 20dB, it is possible to raise the extinction ratio to about 30dB by means of the polarizing plate 63 formed at the light emitting window. In this modified embodiment again, it is not necessary to use a polarization element in the external space of the semiconductor laser 62 so that the embodiment provides a space saving effect at the time of packaging. Of course, the light beam emitted from the light emitting end 15b of the optical fiber 15 shows a raised extinction ratio and hence little fluctuations of the extinction ratio due to the stress and the buckling of the optical fiber.

FIG. 19 is a schematic illustration of an optical transmission unit 11 realized by forming a light emitting window glass 64 of a semiconductor laser 63 to be used as light source so as to show a Brewster's angle. The light emitting window of the semiconductor laser 63 is inclined in order to prevent astigmatism form appearing due to the difference of spreading angle of the light beam emitted from semiconductor laser 63 between the longitudinal direction and the transversal direction. As the window glass 64 of the inclined light emitting window is made to show a Brewster's angle, it reflects the S-polarized component and allows only the P-polarized component to enter the core 30 of the optical fiber 15 at the interface thereof just like a polarizing filter. In short, it is possible to allow only the P-polarized component to enter the optical fiber 15. The P-polarized component of the light beam emitted from the semiconductor laser 63 enters the optical fiber 15 by way of a focusing lens 14. In other words, since the S-polarized component is not allowed to enter the optical fiber 15, the optical fiber 15 emits a light beam with a high extinction ratio. Thus, with this modified embodiment again, the light beam emitted from the semiconductor laser 63 is turned to a linearly polarized light beam showing a high extinction ratio, which light beam is then converged by the focusing lens 14 and introduced into the optical fiber 15 with the axis of polarization of the light beam made agree with the optical axis 34 of the optical fiber 15 of the polarization holding type. Thus, the light beam emitted from the light emitting end 15b of the optical fiber 15 is made to show a high extinction ratio and hence little fluctuations of the extinction ratio due to the stress and the buckling of the optical fiber. Additionally, since this modified embodiment does not comprise a polarization element, it provides a space saving effect at the time of packaging.

In the modified embodiment of FIG. 19, the window glass 64 of the semiconductor laser 63 may be formed by way of a multilayer film process so that all the interfaces of the multilayer film show a Brewster's angle. With this arrangement, the interfaces operate like so many polarizing filters as to reflect the S-polarized component and allow the P-polarized component to enter the core 30 in the optical fiber 15. In short, it is possible to allow only the P-polarized component to enter the optical fiber 15.

While the present invention is described above in terms of a displacement gauging apparatus 10 and a fixed point detection apparatus 40, the present invention is by no means limited thereto. The present invention is applicable to an apparatus comprising at least a light source for emitting a light beam, an extinction ratio converting means for raising the extinction ratio of the light beam emitted from the light source to not less than 20 dB, a focusing lens for focusing the light beam of an extinction ratio raised to not less than 20 dB by the extinction ratio converting means, an optical fiber of the polarization holding type for transmitting the light beam focused by the focusing lens, a diffraction grating fitted to an object of measurement so as to be irradiated with and diffract the light beam transmitted through the optical fiber and a light receiving means for receiving the light beam diffracted by the diffraction grating, wherein the light beam focused by the focusing means with the extinction ratio raised to not less than 20 dB by the extinction ratio converting means is made to enter the optical fiber with its axis of polarization made to agree with the optical axis of the optical fiber or an axis orthogonally intersecting the optical axis and the light receiving means is adapted to detect the displacement of the object of measurement by means of the level of the rate of receiving the diffracted light beam. For example, the invention is applicable to the apparatus such as, a transmission type displacement detection apparatus, a reflection type displacement detection apparatus, a transmission type displacement gauging apparatus and a transmission type fixed point detection apparatus.

Of course, a polarization element may be used for the extinction ratio converting means. If a polarization element is used as the extinction ratio converting means, it may be integrally combined with the focusing lens.

The light receiving end facet of the optical fiber may be made to show a Brewster's angle so as to operate as extinction ratio converting means.

A semiconductor laser may be used for the light source and the polarization element may be formed on the light emitting window glass of the semiconductor laser.

A polarization beam splitter may be used for the extinction ratio converting means. A semiconductor laser may be used for the light source and the polarization beam splitter may be formed on the light emitting window glass of the semiconductor laser.

A semiconductor layer may be used for the light source and the extinction ratio converting means may be realized by forming the light emitting window glass of the semiconductor layer to show a Brewster's angle. The light receiving end facet of the optical fiber may be formed so as to operate as polarization beam splitter and also as extinction ratio converting means.

It should be understood by those skilled in the art that various modifications, combinations, sub-combinations and alterations may occur depending on design requirements and other factors insofar as they are within the scope of the appended claims or the equivalents thereof.

**Claims**

1. A displacement detection apparatus comprising:

   a light source for emitting a light beam;
   extinction ratio converting means for raising the extinction ratio of the light beam emitted from the light source to not less than 20 dB;
   a focusing lens for focusing the light beam of an extinction ratio raised to not less than 20 dB by the extinction ratio converting means;
   an optical fiber of the polarization holding type for transmitting the light beam focused by the focusing lens;
   a diffraction grating fitted to an object of measurement so as to be irradiated with and diffract the light beam transmitted through the optical fiber; and
   light receiving means for receiving the light beam diffracted by the diffraction grating,
   the light beam focused by the focusing lens with the extinction ratio raised to not less than 20 dB by the extinction ratio converting means being made to enter the optical fiber with its axis of polarization made to agree with the optical axis of the optical fiber or an axis orthogonally intersecting the optical axis,
   the light receiving means being adapted to detect the displacement of the object of measurement by means of the level of the rate of receiving the diffracted light beam.

2. The apparatus according to claim 1, wherein the extinction ratio converting means is a polarization element.

3. The apparatus according to claim 2, wherein the polarization element operating as extinction ratio converting means is integrally formed with the focusing lens.

4. The apparatus according to claim 1, wherein the extinction ratio converting means is formed by forming the light receiving end facet of the optical fiber to show a Brewster's angle.

5. The apparatus according to claim 2, wherein a semiconductor laser is used for the light source and the polarization element is formed on a light emitting window glass of the semiconductor laser.

6. The apparatus according to claim 1, wherein the extinction ratio converting means is a polarization beam splitter.

7. The apparatus according to claim 6, wherein a semiconductor laser is used for the light source and the polarization beam splitter is formed on the light emitting window glass of the semiconductor laser.

8. The apparatus according to claim 1, wherein a semiconductor laser is used for the light source and the light emitting window glass of the semiconductor laser is formed to show a Brewster's angle to operate as extinction ratio converting means.

9. The apparatus according to claim 1, wherein the light receiving end facet of the optical fiber is made to operate as polarization beam splitter and also as extinction ratio converting means.

10. A displacement gauging apparatus comprising:

    a light source for emitting a light beam;
    extinction ratio converting means for turning the light beam emitted from the light source into a linearly polarized light beam and raising the extinction ratio thereof to not less than 20 dB;
    a focusing lens for focusing the light beam of an extinction ratio raised to not less than 20 dB by the extinction ratio converting means;
    an optical fiber of the polarization holding type for transmitting the light beam focused by the focusing lens;
    a polarization beam splitter for dividing the light beam transmitted through the optical fiber into two light beams;
    a diffraction grating fitted to an object of measurement and adapted to receive the two light beams produced by the polarization beam splitter and produce diffracted light beams;

a phase plate for changing the polarizations of the two diffracted light beams produced by the diffraction grating;

two reflection mirrors for reflecting the two diffracted light beams with the polarizations changed by the phase plate and leading them to the diffraction grating by way of the phase plate once again;

a polarizing element for causing the two diffracted light beams led to the diffraction grating by the two reflection mirrors, diffracted and made to enter the polarization beam splitter by the diffraction grating and reflected by or transmitted through the polarization beam splitter to interfere with each other; and

a light receiving element for receiving the interference light beam obtained by the polarizing element,

the light beam focused by the focusing lens with the extinction ratio raised to not less than 20 dB by the extinction ratio converting means being made to enter the optical fiber with its axis of polarization made to agree with the optical axis of the optical fiber or an axis orthogonally intersecting the optical axis,

the light receiving means being adapted to detect the displacement of the object of measurement by means of the level of the rate of receiving the diffracted light beam.

11. A fixed point detection apparatus comprising:

a light source for emitting a light beam;

extinction ratio converting means for turning the light beam emitted from the light source into a linearly polarized light beam and raising the extinction ratio thereof to not less than 20 dB;

a focusing lens for focusing the light beam of an extinction ratio raised to not less than 20 dB by the extinction ratio converting means;

an optical fiber of the polarization holding type for transmitting the light beam focused by the focusing lens;

two diffraction gratings arranged side by side so as to be irradiated with the light beam transmitted through the optical fiber and diffract it;

two light receiving means for receiving the diffracted light beams produced by the two diffraction gratings; and

comparison means for comparing the rates of receiving light of the two light receiving means, the light beam focused by the focusing lens with the extinction ratio raised to not less than 20 dB by the extinction ratio converting means being made to enter the optical fiber with its axis of polarization made to agree with the optical axis of the optical fiber or an axis orthogonally intersecting the optical axis,

the comparison means being adapted to detect a fixed point according to the outcome of the comparison of the rates of receiving light of the two light receiving means.

12. The apparatus according to claim 11, wherein the point where the signal obtained as a result of the comparison of the rates of receiving light of the two light receiving means by the comparison means shows an arbitrary selected level is defined as fixed point.

13. A displacement detection apparatus comprising:

a light source for emitting a light beam;

an extinction ratio converting unit that raises the extinction ratio of the light beam emitted from the light source to not less than 20 dB;

a focusing lens for focusing the light beam of an extinction ratio raised to not less than 20 dB by the extinction ratio converting unit;

an optical fiber of the polarization holding type for transmitting the light beam focused by the focusing lens;

a diffraction grating fitted to an object of measurement so as to be irradiated with and diffract the light beam transmitted through the optical fiber; and

a light receiving unit that receives the light beam diffracted by the diffraction grating,

the light beam focused by the focusing lens with the extinction ratio raised to not less than 20 dB by the extinction ratio converting unit being made to enter the optical fiber with its axis of polarization made to agree with the optical axis of the optical fiber or an axis orthogonally intersecting the optical axis,

the light receiving unit being adapted to detect the displacement of the object of measurement by means of the level of the rate of receiving the diffracted light beam.

14. A displacement gauging apparatus comprising:

a light source for emitting a light beam;

an extinction ratio converting unit that turns the light beam emitting from the light source into a linearly polarized light beam and raises the extinction ratio thereof to not less than 20 dB;

a focusing lens for focusing the light beam of an extinction ratio raised to not less than 20 dB by the extinction ratio converting unit;

an optical fiber of the polarization holding type for transmitting the light beam focused by the focusing lens;

a polarization beam splitter for dividing the light beam transmitted through the optical fiber into two light beams;

a diffraction grating fitted to an object of measurement and adapted to receive the two light beams produced by the polarization beam splitter and produce diffracted light beams;

a phase plate for changing the polarizations of the two diffracted light beams produced by the diffraction grating;

two reflection mirrors for reflecting the two diffracted light beams with the polarizations changed by the phase plate and leading them to the diffraction grating by way of the phase plate once again;

a polarizing element for causing the two diffracted light beams led to the diffraction grating by the two reflection mirrors, diffracted and made to enter the polarization beam splitter by the diffraction grating and reflected by or transmitted through the polarization beam splitter to interfere with each other; and

a light receiving element for receiving the interference light beam obtained by the polarizing element,

the light beam focused by the focusing lens with the extinction ratio raised to not less than 20 dB by the extinction ratio converting unit being made to enter the optical fiber with its axis of polarization made to agree with the optical axis of the optical fiber or an axis orthogonally intersecting the optical axis,

the light receiving unit being adapted to detect the displacement of the object of measurement by means of the level of the rate of receiving the diffracted light beam.

15. A fixed point detection apparatus comprising:

a light source for emitting a light beam;

an extinction ratio converting unit that turns the light beam emitted from the light source into a linearly polarized light beam and raises the extinction ratio thereof to not less than 20 dB;

a focusing lens for focusing the light beam of an extinction ratio raised to not less than 20 dB by the extinction ratio converting unit;

an optical fiber of the polarization holding type for transmitting the light beam focused by the focusing lens;

two diffraction gratings arranged side by side so as to be irradiated with the light beam transmitted through the optical fiber and diffract it;

two light receiving unit that receives the diffracted light beams produced by the two diffraction gratings; and

a comparison unit that compares the rates of receiving light of the two light receiving unit,

the light beam focused by the focusing lens with the extinction ratio raised to not less than 20 dB by the extinction ratio converting unit being made to enter the optical fiber with its axis of polarization made to agree with the optical axis of the optical fiber or an axis orthogonally intersecting the optical axis,

the comparison unit being adapted to detect a fixed point according to the outcome of the comparison of the rates of receiving light of the two light receiving unit.

FIG.1

FIG.2

FIG.3

FIG.4

FIG.5

<u>180</u>

FIG.6

FIG.7

## FIG.8

## FIG.9

FIG.10

FIG.11

FIG.12

EP 1 669 725 A1

PC
(data collection)

58

40

Light incident section
(light source
+ polarization element
+ focusing lens)

55

2r

45

Comparator

54

46

50

48 49

Fixed point detection apparatus

Interpolation
circuit

57

Encoder

56

A

51

FIG.13

27

FIG.14

<u>11</u>

FIG.15

<u>11</u>

FIG.16

<u>11</u>

FIG.17

<u>1 1</u>

6 2  6 3  1 4                    1 5

15a                          15b

# FIG.18

<u>1 1</u>

6 3  6 4  1 4                    1 5

P-component

15a                          15b

S-component

# FIG.19

**European Patent Office**

**EUROPEAN SEARCH REPORT**

Application Number

EP 05 02 7122

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 539 757 A (CANON KABUSHIKI KAISHA) 5 May 1993 (1993-05-05) * abstract; figure 2 * | 1-15 | INV. G01D5/38 |
| X | US 2004/080755 A1 (TAMIYA HIDEAKI ET AL) 29 April 2004 (2004-04-29) | 1-15 | |
| Y | * paragraphs [0081], [0082], [0112] - [0115], [0131]; figure 1 * | 1-15 | |
| D,Y | PATENT ABSTRACTS OF JAPAN vol. 017, no. 161 (P-1512), 29 March 1993 (1993-03-29) & JP 04 324316 A (SONY MAGNESCALE INC), 13 November 1992 (1992-11-13) * abstract * | 1-15 | |
| Y | PATENT ABSTRACTS OF JAPAN vol. 012, no. 062 (P-670), 25 February 1988 (1988-02-25) & JP 62 204126 A (CANON INC), 8 September 1987 (1987-09-08) * abstract * | 1-15 | |

TECHNICAL FIELDS SEARCHED (IPC)

G01D

The present search report has been drawn up for all claims

| Place of search | Date of completion of the search | Examiner |
|---|---|---|
| Munich | 11 April 2006 | Kallinger, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 02 7122

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2006

| Patent document cited in search report | | Publication date | Patent family member(s) | | Publication date |
|---|---|---|---|---|---|
| EP 0539757 | A | 05-05-1993 | DE<br>DE<br>US | 69223916 D1<br>69223916 T2<br>5436724 A | 12-02-1998<br>28-05-1998<br>25-07-1995 |
| US 2004080755 | A1 | 29-04-2004 | DE<br>JP | 10349128 A1<br>2004144581 A | 08-07-2004<br>20-05-2004 |
| JP 04324316 | A | 13-11-1992 | JP | 3030905 B2 | 10-04-2000 |
| JP 62204126 | A | 08-09-1987 | NONE | | |

EPO FORM P0459

For more details about this annex : see Official Journal of the European Patent Office, No. 12/82